# FASCICULE DE BREVET EUROPEEN

(11) **EP 4 690 108 B1**
(45) Date de publication et mention de la délivrance du brevet: **28.10.2026**
(21) Numéro de dépôt: 24713518.9
(22) Date de dépôt: 04.03.2024
(51) Int. Cl.: G06T 7/55

(54) **PROCÉDÉ ET DISPOSITIF DE DÉTERMINATION D'UNE PROFONDEUR PAR UN SYSTÈME DE VISION STÉRÉOSCOPIQUE NON PARALLÈLE**
VERFAHREN UND VORRICHTUNG ZUR TIEFENBESTIMMUNG MITTELS EINES NICHTPARALLELEN STEREOSKOPISCHEN SICHTSYSTEMS
METHOD AND DEVICE FOR DETERMINING A DEPTH BY MEANS OF A NON-PARALLEL STEREOSCOPIC VISION SYSTEM

(30) Priorité: 04.04.2023 FR 2303330
(43) Date de publication de la demande: 11.02.2026
(73) Titulaire: Stellantis Auto SAS, 78300 Poissy (FR)
(72) Inventeur: LI, Hai, 78620 L ETANG LA VILLE (FR)
(74) Mandataire: ESIP
(86) Numéro de dépôt international: PCT/FR2024/050266
(87) Numéro de publication internationale: WO 2024/209137

(56) Documents cités:
- WO-A1-2022/187753
- LI XIANGYU ET AL: "DVONet: Unsupervised Monocular Depth Estimation and Visual Odometry", 2019 IEEE VISUAL COMMUNICATIONS AND IMAGE PROCESSING (VCIP), IEEE, 1 December 2019 (2019-12-01), pages 1 - 4, XP033693910, DOI: 10.1109/VCIP47243.2019.8965952
- KENNY CHEN ET AL: "Unsupervised Monocular Depth Learning with Integrated Intrinsics and Spatio-Temporal Constraints", ARXIV.ORG, CORNELL UNIVERSITY LIBRARY, 201 OLIN LIBRARY CORNELL UNIVERSITY ITHACA, NY 14853, 2 November 2020 (2020-11-02), XP081805805
- XU JIALEI 21B903029@STU HIT EDU CN ET AL: "Multi-Camera Collaborative Depth Prediction via Consistent Structure Estimation", PROCEEDINGS OF THE 30TH ACM INTERNATIONAL CONFERENCE ON MULTIMEDIA, ACMPUB27, NEW YORK, NY, USA, 10 October 2022 (2022-10-10), pages 2730 - 2738, XP058895766, ISBN: 978-1-4503-9036-1, DOI: 10.1145/3503161.3548394
- SAAD IMRAN ET AL: "Increased-Range Unsupervised Monocular Depth Estimation", ARXIV.ORG, CORNELL UNIVERSITY LIBRARY, 201 OLIN LIBRARY CORNELL UNIVERSITY ITHACA, NY 14853, 23 June 2020 (2020-06-23), XP081708363
- JIANRONG WANG ET AL: "Self-Supervised Joint Learning Framework of Depth Estimation via Implicit Cues", ARXIV.ORG, 26 June 2020 (2020-06-26), XP081697909
- MATTEO POGGI ET AL: "On the Synergies between Machine Learning and Binocular Stereo for Depth Estimation from Images: a Survey", ARXIV.ORG, CORNELL UNIVERSITY LIBRARY, 201 OLIN LIBRARY CORNELL UNIVERSITY ITHACA, NY 14853, 31 March 2021 (2021-03-31), XP081900602

## Description

### Domaine technique

La présente invention revendique la priorité de la demande française 2303330 déposée le 04.04.2023 dont le contenu (texte, dessins et revendications) est ici incorporé par référence. La présente invention concerne les procédés et dispositifs de détermination d'une profondeur par système de vision stéréoscopique embarqué dans un véhicule, par exemple dans un véhicule automobile. La présente invention concerne également un procédé et un dispositif de mesurage d'une telle profondeur. La présente invention concerne également un procédé et un dispositif de contrôle d'un ou plusieurs systèmes ADAS embarqués dans un véhicule à partir de la profondeur déterminée.

### Arrière-plan technologique

De nombreux véhicules modernes sont équipés de systèmes d'aide à la conduite dits ADAS (de l'anglais « Advanced Driver-Assistance System » ou en français « Système d'aide à la conduite avancé »). De tels systèmes ADAS sont des systèmes de sécurité passifs et actifs conçus pour éliminer la part d'erreur humaine dans la conduite de véhicules de tous types. Les ADAS utilisent des technologies avancées pour assister le conducteur pendant la conduite et améliorer ainsi ses performances. Les ADAS utilisent une combinaison de technologies de capteurs pour percevoir l'environnement autour d'un véhicule, puis fournissent des informations au conducteur ou agissent sur certains systèmes du véhicule.

Il existe plusieurs niveaux d'ADAS, tels que les caméras de recul et les capteurs d'angle mort, les systèmes d'alerte de franchissement de ligne, les régulateurs de vitesse adaptatifs ou encore les systèmes de stationnement automatique.

Les ADAS embarqués dans un véhicule sont alimentés par des données obtenues d'un ou plusieurs capteurs embarqués tels que, par exemple, des caméras. Ces caméras permettent notamment de détecter et de situer d'autres usagers de la route ou d'éventuels obstacles présents autour d'un véhicule afin, par exemple :
- d'adapter l'éclairage du véhicule en fonction de la présence d'autres usagers ;
- de réguler de façon automatique la vitesse du véhicule ;
- d'agir sur le système de freinage en cas de risque d'impact avec un objet.

De la qualité des données émises par un système de vision dépend donc le bon fonctionnement des périphériques d'aides à la conduite utilisant ces données.

La publication "DVONet: Unsupervised Monocular Depth Estimation and Visual Odometry" par LI XIANGYU ET. AL., 2019 IEEE VISUAL COMMUNICATIONS AND IMAGE PROCESSING (VCIP), IEEE, (2019-12-01), pages 1-4 divulgue DVONet, un framework non supervisé apprenant conjointement profondeur monoculaire et odométrie visuelle à partir de séquences stéréo. Un masque d'occlusion gauche-droite atténue les artefacts stéréo, et un extracteur partagé sert à la fois à l'estimation de pose et au flux optique.

La publication Unsupervised Monocular Depth Learning with Integrated Intrinsics and Spatio-Temporal Constraints" par KENNY CHEN ET. AL., ARXIV.ORG, CORNELL UNIVERSITY LIBRARY, 201 OLIN LIBRARY CORNELL UNIVERSITY ITHACA, NY 14853, (2020-11-02) divulgue un framework non supervisé capable de prédire simultanément profondeur à l'échelle, egomotion et paramètres intrinsèques à partir de vidéo monoculaire. Des contraintes géométriques spatiales et temporelles sont intégrées dans les fonctions de perte de reconstruction, assurant la récupération d'échelle sans supervision externe.

Le brevet WO 2022/187753 A1 (INNOPEAK TECH INC [US]) 9 septembre 2022 divulgue un système de raffinement de profondeur monoculaire guidé par SLAM avec apprentissage en ligne auto-supervisé. Le SLAM augmenté (réseau de profondeur entraîné ou flux optique RAFT) fournit poses, points de carte et cartes de profondeur. Un second module calcule des pertes photométriques, de points de carte, de cohérence de profondeur et de lissage, puis met à jour itérativement le modèle de profondeur.

### Résumé de la présente invention

Un objet de la présente invention est de résoudre au moins l'un des problèmes de l'arrière-plan technologique décrit précédemment.

Un autre objet de la présente invention est d'améliorer la qualité des données issues de ces caméras.

Un autre objet de la présente invention est d'améliorer la sécurité routière.

Selon un premier aspect, la présente invention concerne un procédé de détermination d'une profondeur par un système de vision stéréoscopique embarqué dans un véhicule, le système de vision stéréoscopique comprenant un ensemble de caméras d'au moins deux caméras disposées de manière à acquérir chacune une image d'une scène selon un point de vue différent, les axes optiques représentatifs d'une orientation du champ de vision de chaque caméra étant orientés de façon non parallèle. Le procédé est caractérisé en ce qu'il comprend les étapes suivantes :
- réception de premières et deuxièmes données respectivement représentatives d'une première et deuxième images acquises par respectivement une première et deuxième caméras de l'ensemble de caméras à un même premier instant temporel d'acquisition ;
- détermination d'un ensemble de pixels dans la deuxième image correspondant à un premier ensemble de pixels de la première image.
- calcul de premières profondeurs associées au premier ensemble de pixels de la première image en fonction de valeurs de disparité déterminées à partir de l'ensemble de pixels de la deuxième image et du premier ensemble de pixels de la première image ;

- détermination d'un premier masque de visibilité associé à la première image et représentatif d'un deuxième ensemble de pixels de la première image ayant au moins un pixel correspondant dans la deuxième image, le premier masque de visibilité étant déterminé par une méthode de calcul par flux optique ;
- réception de troisièmes données représentatives d'une troisième image acquise par la première caméra à un deuxième instant temporel d'acquisition antérieur au premier instant temporel d'acquisition de la première image ;
- calcul de deuxièmes profondeurs associées à un troisième ensemble de pixels de la première image via un système de vision monoscopique à partir d'un ensemble de pixels de la troisième image correspondants au troisième ensemble de pixels de la première image et du troisième ensemble de pixels de la première image, le système de vision monoscopique étant formé de la première caméra ;
- premier apprentissage automatique du système de vision monoscopique sous supervision du système de vision stéréoscopique par minimisation d'une première erreur de calcul entre les première et deuxième profondeurs en fonction du premier masque de visibilité.

Le procédé permet ainsi de calculer la profondeur d'un objet dans la première image vu par le système de vision monoscopique avec la précision métrique du système de vision stéréoscopique.

Selon une variante de procédé, le premier apprentissage automatique est obtenu par minimisation de la fonction suivante représentative de la première erreur :
${L}_{s \to m} = {\sum }_{{p}_{t}} \left({V}_{s}\left({p}_{t}\right){\left‖{D}_{tm}\left({p}_{t}\right)-{D}_{ts}\left({p}_{t}\right)\right‖}_{2}\right)$

Avec :
- *L*_{*s*→*m*} correspond à une perte de recalage de la première profondeur par rapport à la deuxième profondeur ;
- *pₜ* est un pixel de la première image ;
- *Vₛ*(*pₜ*) est une information de visibilité du pixel *pₜ* par le système de vision stéréoscopique ;

- *Dₜₘ* est la deuxième profondeur calculée pour un pixel *pₜ* ; et
- *Dₜₛ* est la première profondeur calculée pour un pixel *pₜ*.

La supervision du système de vision monoscopique par le système de vision stéréoscopique permet ainsi d'ajuster les profondeurs calculées par le système de vision monoscopique.

Selon une autre variante, le procédé comprend en outre un deuxième apprentissage automatique du système de vision stéréoscopique sous supervision du système de vision monoscopique par minimisation d'une deuxième erreur de calcul entre les première et deuxième profondeurs en fonction du premier masque de visibilité.

Selon une autre variante, le procédé comprend en outre une étape de détermination d'un deuxième masque de visibilité associé à la première image et représentatif d'un quatrième ensemble de pixels de la première image ayant au moins un pixel correspondant dans la troisième image, le deuxième masque de visibilité étant déterminé par la méthode de calcul par flux optique, le deuxième apprentissage automatique étant en outre fonction dudit deuxième masque de visibilité.

L'utilisation du deuxième masque de visibilité pour le deuxième apprentissage automatique permet ainsi d'exclure des valeurs aberrantes de profondeur calculées par le système de vision monoscopique.

Selon une variante supplémentaire, le procédé comprend en outre une étape de détermination d'un masque d'objets dynamiques associé à la première image et représentatif d'un cinquième ensemble de pixels de la première image associé à au moins un objet en mouvement dans la scène, le deuxième apprentissage automatique étant en outre fonction du masque d'objets dynamiques.

L'utilisation du masque d'objets dynamiques pour le deuxième apprentissage automatique permet ainsi d'exclure des valeurs de profondeur faussées par le déplacement propre d'un objet dans la scène.

Selon une autre variante du procédé, le deuxième apprentissage automatique est obtenu, en outre, par minimisation de la fonction suivante représentative de la deuxième erreur : ${L}_{m \to s} = {\sum }_{{p}_{t}} \left({V}_{m}\left({p}_{t}\right)\left[1-{M}_{d}\left({p}_{t}\right)\right]\left(1-{V}_{s}\left({p}_{t}\right)\right){\left‖{D}_{tm}\left({p}_{t}\right)-{D}_{ts}\left({p}_{t}\right)\right‖}_{2}\right)$

Avec :
- *L*_{*m*→*s*} correspond à une perte de recalage de la deuxième profondeur par rapport à la première profondeur ;
- *pₜ* est un pixel de la première image ;
- *Vₛ*(*pₜ*) est une information de visibilité du pixel *pₜ* par le système de vision stéréoscopique ;
- *Vₘ*(*pₜ*) est une information de visibilité du pixel *pₜ* par le système de vision monoscopique ;
- *M_{d}*(*pₜ*) est une information de mouvement obtenue du masque des objets dynamiques ;
- *Dₜₘ*(*pₜ*) est ladite deuxième profondeur calculée pour un pixel *pₜ* ; et
- *Dₜₛ*(*pₜ*) est ladite première profondeur calculée pour un pixel *pₜ.*

Le système de vision monoscopique permet ainsi d'affiner les profondeurs calculées par le système de vision stéréoscopique uniquement dans les zones occluses pour le système de vision stéréoscopique, le système de vision monoscopique étant moins précis que le système de vision stéréoscopique.

Selon une variante du procédé, les premières profondeurs sont calculées via un réseau de neurones convolutif à apprentissage auto-supervisé, le procédé comprenant en outre les étapes de :
- reconstruction d'une quatrième image à partir de la première image et des premières profondeurs ;
- obtention d'une première erreur de reconstruction par comparaison des deuxième et quatrième images,
   le réseau de neurones convolutif étant appris de manière auto-supervisée en fonction de la première erreur de reconstruction.

Selon encore une variante du procédé, les deuxièmes profondeurs sont calculées via un réseau de neurones convolutif à apprentissage auto-supervisé, le procédé comprenant en outre les étapes de :
- reconstruction d'une cinquième image à partir de la première image et des deuxièmes profondeurs ;
- obtention d'une deuxième erreur de reconstruction par comparaison des troisième et cinquième images,
   le réseau de neurones convolutif étant appris de manière auto-supervisée en fonction de la deuxième erreur de reconstruction.

Les réseaux de neurones convolutifs sont ainsi en mesure de réaliser un apprentissage auto-supervisé afin d'optimiser leurs paramètres.

Selon un deuxième aspect, la présente invention concerne un dispositif de détermination d'une profondeur par un système de vision stéréoscopique embarqué dans un véhicule, le dispositif comprenant une mémoire associée à au moins un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de la présente invention ressortiront de la description des exemples de réalisation particuliers et non limitatifs de la présente invention ci-après, en référence aux figures 1 à 4 annexées, sur lesquelles :
[Fig. 1] illustre schématiquement un système de vision stéréoscopique non parallèle équipant un véhicule, selon un exemple de réalisation particulier et non limitatif de la présente invention ;
[Fig. 2] illustre schématiquement un dispositif configuré pour la détermination d'une profondeur par système de vision stéréoscopique embarqué dans le véhicule de la figure 1, selon un exemple de réalisation particulier et non limitatif de la présente invention ;
[Fig. 3] illustre un organigramme des différentes opérations d'un processus de détermination d'une profondeur par système de vision stéréoscopique embarqué dans le véhicule de la figure 1, selon un exemple de réalisation particulier et non limitatif de la présente invention ;
[Fig. 4] illustre un organigramme des différentes étapes d'un procédé de de détermination d'une profondeur par système de vision stéréoscopique embarqué dans le véhicule de la figure 1, selon un exemple de réalisation particulier et non limitatif de la présente invention.

### Description des exemples de réalisation

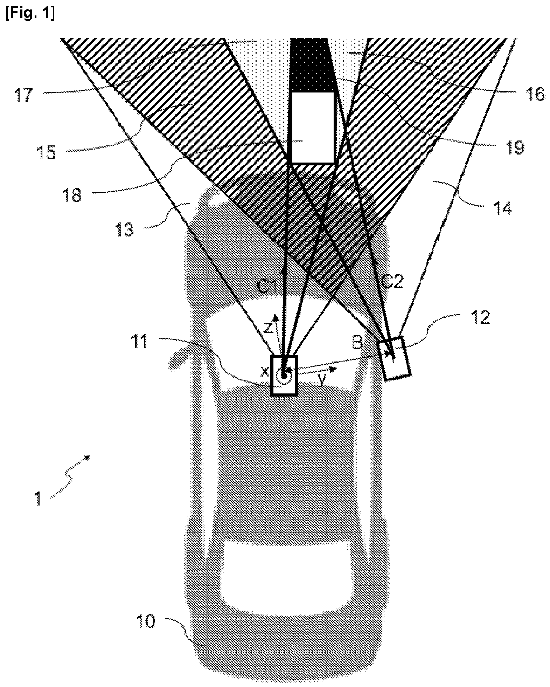

Un procédé et un dispositif de détermination d'une profondeur par système de vision stéréoscopique, par la suite appelé système stéréo, embarqué dans un véhicule vont maintenant être décrits dans ce qui va suivre en référence conjointement aux figures 1 à 4. Des mêmes éléments sont identifiés avec des mêmes signes de référence tout au long de la description qui va suivre.

Selon un exemple particulier et non limitatif de réalisation de la présente invention, un procédé de détermination d'une profondeur par système de vision stéréoscopique embarqué dans un véhicule, dit système stéréo, est par exemple mis en œuvre par un calculateur du système embarqué du véhicule contrôlant ce système stéréo.

Le système stéréo comprend un ensemble de caméras d'au moins deux caméras disposées de manière à acquérir chacune une image d'une scène selon un point de vue différent, les axes optiques représentatifs d'une orientation du champ de vision de chaque caméra étant orientés de façon non parallèle. Le système de vision stéréoscopique est ainsi dit non parallèle.

A cet effet, le procédé de détermination d'une profondeur par un système de vision stéréoscopique embarqué dans un véhicule comprend la réception de premières et deuxièmes données respectivement représentatives d'une première et deuxième images acquises par respectivement une première et deuxième caméras d'un ensemble de caméras à un même premier instant temporel d'acquisition, la détermination d'un ensemble de pixels dans la deuxième image correspondant à un premier ensemble de pixels de la première image, le calcul de premières profondeurs associées au premier ensemble de pixels de la première image et la détermination d'un premier masque de visibilité associé à la première image et représentatif d'un deuxième ensemble de pixels de la première image ayant au moins un pixel correspondant dans la deuxième image.

Le procédé comprend aussi la réception de troisièmes données représentatives d'une troisième image acquise par la première caméra à un deuxième instant temporel d'acquisition antérieur au premier instant temporel d'acquisition de la première image et le calcul de deuxièmes profondeurs associées à un troisième ensemble de pixels de la première image via un système de vision monoscopique formé de la première caméra à partir d'un ensemble de pixels de la troisième image correspondants au troisième ensemble de pixels de la première image et du troisième ensemble de pixels de la première image.

Un premier apprentissage automatique d'un système de vision monoscopique est réalisé sous supervision du système de vision stéréoscopique par minimisation d'une première erreur de calcul entre les première et deuxième profondeurs en fonction du premier masque de visibilité, le système de vision monoscopique étant formé de la première caméra.

La figure 1 illustre schématiquement un système de vision stéréoscopique non parallèle équipant un véhicule, selon un exemple de réalisation particulier et non limitatif de la présente invention.

Un tel environnement 1 correspond, par exemple, à un environnement routier formé d'un réseau de routes accessibles pour le véhicule 10.

Dans cet exemple, le véhicule 10 correspond à un véhicule à moteur thermique, à moteur(s) électrique(s) ou encore un véhicule hybride avec un moteur thermique et un ou plusieurs moteurs électriques. Le véhicule 10 correspond ainsi, par exemple, à un véhicule terrestre tel une automobile, un camion, un car, une moto. Enfin, le véhicule 10 correspond à un véhicule autonome ou non, c'est-à-dire un véhicule circulant selon un niveau d'autonomie déterminé ou sous la supervision totale du conducteur.

Le véhicule 10 comprend avantageusement plusieurs caméras 11, 12 embarquées, chacune configurée pour acquérir des images d'une scène dans l'environnement du véhicule 10. Cet ensemble de caméras 11, 12 forme le système stéréo. Deux caméras 11 et 12 sont illustrées sur la figure 1. La présente invention ne se limite cependant pas à un système stéréo comprenant deux caméras mais s'étend à tout système stéréo comprenant 2 ou plus caméras, par exemple 2, 3, 4 ou 5 caméras.

Les deux caméras 11, 12 disposent de paramètres intrinsèques connus. Ces paramètres se composent notamment de :
- la distance focale f1 de la première caméra 11 ;
- la distance focale f2 de la deuxième caméra 12 ;
- les distorsions qui sont dues aux imperfections du système optique de chaque caméra ;
- la direction C1 de l'axe optique de la première caméra 11 ;
- la direction C2 de l'axe optique de la deuxième caméra 12 ; et
- les résolutions respectives des caméras 11, 12.

Les paramètres intrinsèques caractérisent la transformation qui associe, pour un point image, les coordonnées caméra aux coordonnées pixel, dans chaque caméra. Ces paramètres ne changent pas si l'on déplace la caméra.

Les distorsions, qui sont dues aux imperfections du système optique telles que des défauts de forme et de positionnement des lentilles des caméras, vont dévier les faisceaux lumineux et donc induire un écart de positionnement pour le point projeté par rapport à un modèle idéal. Il est possible alors de compléter le modèle de caméra en y introduisant les trois distorsions qui génèrent le plus d'effets, à savoir les distorsions radiales, de décentrage et prismatiques, induites par des défauts de courbure, de parallélisme des lentilles et de coaxialité des axes optiques. Dans cet exemple, les caméras sont supposées parfaites, c'est-à-dire que les distorsions ne sont pas prises en compte ou que leur correction est traitée au moment de l'acquisition d'une image.

Ces deux caméras 11, 12 sont disposées de manière à acquérir chacune une image d'une scène selon un point de vue différent, le premier point de vue est par exemple localisé sur ou dans le rétroviseur gauche du véhicule 10 ou en haut du pare-brise du véhicule 10, le deuxième point de vue est par exemple localisé sur ou dans le rétroviseur droit du véhicule 10 ou en haut du pare-brise du véhicule 10. Dans le cas où les deux caméras sont situées en haut du pare-brise du véhicule, celles-ci sont alors placées à une certaine distance. Dans cet exemple, la première caméra 11 est située en haut du pare-brise du véhicule 10, la deuxième caméra 12 est située dans le rétroviseur droit du véhicule 10.

Un premier repère est associé à la première caméra 11 :
- la direction de l'axe y est définie par la position de la deuxième caméra 12, de manière à placer la deuxième caméra 12 sur l'axe y de la première caméra 11. La distance B séparant les deux caméras 11, 12 est appelée base de référence (en anglais « baseline ») et la direction séparant les deux caméras 11, 12 est celle de l'axe y ;
- la direction de l'axe x est définie orthogonale à celle de l'axe y et orthogonale à celle de l'axe optique C1 de la première caméra 11 ;
- la direction de l'axe z est définie orthogonale aux directions des axes x et y.

Les trois axes x, y et z forment ainsi un repère orthonormé.

Les paramètres extrinsèques liés à la position des caméras 11, 12 sont les paramètres suivants :
- 3 translations dans les directions x, y et z : Tx, Ty et Tz constituant le vecteur translation T ; et
- 3 rotations autour des axes x, y et z : Rx, Ry et Rz, constituant la matrice de rotation R.

Déterminer les paramètres extrinsèques constitue le problème de la calibration d'un système de vision stéréoscopique.

Une contrainte principale du système de vision stéréoscopique utilisé dans l'automobile est, par exemple, la grande distance entre les deux caméras. En effet, pour pouvoir couvrir une plage de mesure de 200 mètres, le « baseline » doit atteindre 60cm pour les caméras couramment utilisées dans ce domaine.

Les deux caméras 11, 12 font l'acquisition d'images d'une scène se situant devant le véhicule 10, la première caméra couvrant seule un premier champ d'acquisition 13, la deuxième caméra couvrant seule un deuxième champ d'acquisition 14 et les deux caméras 11, 12 couvrant toutes deux un troisième champ d'acquisition 15. Les premier et troisième champs d'acquisition 13, 15 permettent ainsi une vision monoscopique de la scène par la première caméra 11, les deuxième et troisième champs d'acquisition 14, 15 permettent une vision monoscopique de la scène par la deuxième caméra 12 et le troisième champ d'acquisition 15 permet une vision stéréoscopique de la scène par le système de vision stéréoscopique composé des deux caméras 11, 12.

Un obstacle 18 est placé dans le champ d'acquisition des caméras, par exemple dans le troisième champ d'acquisition 15. La présence de l'obstacle 18 définit un champ d'occlusion pour le système stéréo composé ici des trois champs 16, 17 et 19.

Parmi ces trois champs, le champ 16 est visible depuis la deuxième caméra 12. La partie de la scène présente dans ce champ 16 est donc observable à l'aide du système de vision monoscopique composé de la deuxième caméra 12.

Le champ 17 est quant à lui visible depuis la première caméra 11. La partie de la scène présente dans ce champ 17 est donc observable à l'aide du système de vision monoscopique composé de la deuxième caméra 11.

Enfin, le champ 19 n'est visible depuis aucune des caméras. La partie de la scène présente dans ce champ 19 n'est donc pas observable.

Les directions C1, C2 des axes optiques représentatifs d'une orientation du champ de vision de chaque caméra sont orientées non parallèlement de manière à obtenir le troisième champ d'acquisition 15 de l'environnement 1 le plus large possible.

Il est évident qu'il est possible d'utiliser un tel système de vision stéréoscopique pour prendre des images de scènes situées sur les côtés ou derrière le véhicule 10 en l'équipant de caméras placées et orientées différemment.

Les images acquises par les caméras 11, 12 à un instant temporel d'acquisition t1 donné se présentent sous la forme de données représentant des pixels caractérisés par :
- des coordonnées dans chaque image ; et
- des données relatives aux couleurs et luminosité des objets de la scène observée sous forme par exemple de coordonnées colorimétriques RGB (de l'anglais « Red Green Blue », en français « Rouge Vert Bleu ») ou TSL (Ton, Saturation, Luminosité).

Les images acquises par les caméras 11, 12 représentent des vues d'une même scène prises à des points de vue différents, les position des caméras étant distinctes. Sur cette scène se trouvent par exemple :
- des bâtiments ;
- des infrastructures routières ;
- d'autres usagers immobiles, par exemple un véhicule stationné ; et/ou
- d'autres usagers mobiles, par exemple un autre véhicule, un cycliste ou un piéton en mouvement.

Ces images sont envoyées à un calculateur d'un dispositif équipant le véhicule 10 ou stockées dans une mémoire d'un dispositif accessible à un calculateur d'un dispositif équipant le véhicule 10.

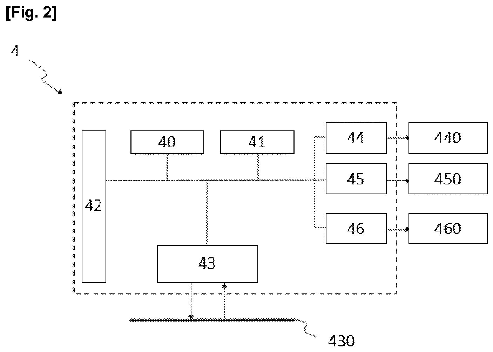

La figure 2 illustre schématiquement un dispositif 4 configuré pour la détermination d'une profondeur par un système de vision stéréoscopique embarqué dans un véhicule 10, selon un exemple de réalisation particulier et non limitatif de la présente invention. Le dispositif 4 correspond par exemple à un dispositif embarqué dans le premier véhicule 10, par exemple un calculateur.

Le dispositif 4 est par exemple configuré pour la mise en œuvre des opérations et/ou étapes décrites en regard des figures 1, 3 et 4. Des exemples d'un tel dispositif 4 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 4, individuellement ou en combinaison, peuvent être intégrés dans un unique circuit intégré, dans plusieurs circuits intégrés, et/ou dans des composants discrets. Le dispositif 4 peut être réalisé sous la forme de circuits électroniques ou de modules logiciels (ou informatiques) ou encore d'une combinaison de circuits électroniques et de modules logiciels.

Le dispositif 4 comprend un (ou plusieurs) processeur(s) 40 configurés pour exécuter des instructions pour la réalisation des étapes du procédé et/ou pour l'exécution des instructions du ou des logiciels embarqués dans le dispositif 4. Le processeur 40 peut inclure de la mémoire intégrée, une interface d'entrée/sortie, et différents circuits connus de l'homme du métier. Le dispositif 4 comprend en outre au moins une mémoire 41 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 41.

Selon différents exemples de réalisation particuliers et non limitatifs, le dispositif 4 est couplé en communication avec d'autres dispositifs ou systèmes similaires (par exemple d'autres calculateurs) et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 4 comprend un bloc 42 d'éléments d'interface pour communiquer avec des dispositifs externes. Les éléments d'interface du bloc 42 comprennent une ou plusieurs des interfaces suivantes :
- interface radiofréquence RF, par exemple de type Wi-Fi^{®} (selon IEEE 802.11), par exemple dans les bandes de fréquence à 2,4 ou 5 GHz, ou de type Bluetooth^{®} (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
   interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Selon un autre exemple de réalisation particulier et non limitatif, le dispositif 4 comprend une interface de communication 43 qui permet d'établir une communication avec d'autres dispositifs (tels que d'autres calculateurs du système embarqué) via un canal de communication 430. L'interface de communication 43 correspond par exemple à un transmetteur configuré pour transmettre et recevoir des informations et/ou des données via le canal de communication 430. L'interface de communication 43 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 4 peut fournir des signaux de sortie à un ou plusieurs dispositifs externes, tels qu'un écran d'affichage 440, tactile ou non, un ou des haut-parleurs 450 et/ou d'autres périphériques 460 (système de projection) via respectivement les interfaces de sortie 44, 45, 46. Selon une variante, l'un ou l'autre des dispositifs externes est intégré au dispositif 4.

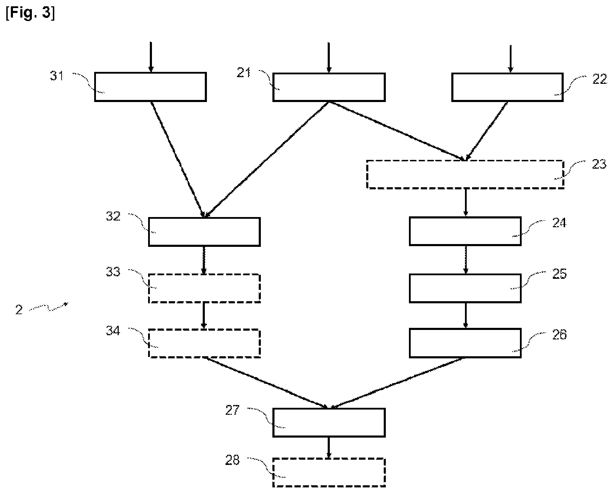

La figure 3 illustre un organigramme des différentes opérations d'un processus 2 de détermination d'une profondeur par système de vision stéréoscopique embarqué dans le véhicule de la figure 1, selon un exemple de réalisation particulier et non limitatif de la présente invention.

Le processus est par exemple mis en œuvre par un ou plusieurs processeurs d'un ou plusieurs calculateurs embarqués dans le véhicule 10, par exemple par un calculateur contrôlant le système stéréo.

Dans une première opération 21, le calculateur reçoit des premières données représentatives d'une première image acquise par une première caméra 11 de l'ensemble de caméras à un premier instant temporel d'acquisition t1.

Dans une deuxième opération 22, le calculateur reçoit des deuxièmes données représentatives d'une deuxième image acquise par une deuxième caméra 12 de l'ensemble de caméras au même premier instant temporel d'acquisition t1.

Les deux images reçues correspondent à deux vues d'une même scène se déroulant aux alentours du véhicule 10 à même premier instant temporel d'acquisition t1 donné.

Afin de faciliter l'analyse des deux images reçues, les première et deuxième images sont rectifiées dans une opération 23, suivant une méthode connue de l'homme du métier. Une telle méthode est décrite, par exemple, dans « Rectification Projective d'Images Stéréo non Calibrées Infrarouges avec prise en compte globale de la minimisation des distorsions » de Benoit Ducarouge, Thierry Sentenac, Florian Bugarin et Michel Devy du 16 juillet 2009.

La méthode de rectification consiste à réorienter les lignes épipolaires pour qu'elles soient parallèles avec l'axe horizontal de l'image. Cette méthode est décrite par une transformation qui projette les épipoles à l'infini et dont les points correspondants sont nécessairement sur une même ordonnée.

Un algorithme de rectification consiste, par exemple, en 4 étapes :
- Faire pivoter (virtuellement) la première caméra 11 pour que l'épipole aille à l'infini le long de l'axe horizontal du repère qui lui est associé;
- Appliquer la même rotation à la deuxième caméra pour se retrouver dans la configuration géométrique initiale;
- Faire pivoter la deuxième caméra de la rotation associée à la matrice de rotation 'R', correspondant au paramètre extrinsèque du système stéréo de départ;
- Ajuster l'échelle dans les deux repères caméras.

Il est à noter que cette opération 23 est optionnelle, en effet la rectification simplifie la mise en correspondance des pixels des images stéréo. Le pixel correspondant dans la deuxième image à un pixel de la première image (et réciproquement) est positionné sur la même ligne. A partir de la connaissance de la géométrie épipolaire et donc d'une matrice fondamentale du système stéréo, l'objectif est alors de déterminer une paire de transformations projectives, appelée homographies, qui réorientent les projections épipolaires parallèlement aux lignes des images, donc à l'axe horizontal des caméras rectifiées.

L'opération 24 suivante consiste à la détermination d'un ensemble de pixels dans la deuxième image correspondant à un premier ensemble de pixels de la première image, cette opération est appelée « appariement stéréo » (en anglais « feature matching »).

L'appariement stéréo ou l'estimation de la disparité est le processus de recherche des pixels dans les vues stéréoscopiques qui correspondent au même point 3D dans la scène. La géométrie épipolaire rectifiée simplifie ce processus de recherche de correspondances sur une même ligne épipolaire. Il n'est pas nécessaire de calculer les coordonnées du point 3D pour trouver le pixel correspondant sur la même ligne de l'autre image. La disparité est la distance d entre un pixel et sa correspondance dans l'autre image. Cette disparité est horizontale lorsque les images sont rectifiées, l'horizontalité étant définie suivant la direction x de la première image.

L'opération 24 d'appariement stéréo se fait par mise en œuvre d'une méthode dite de calcul par flux optique (en anglais « optical flow »). Une telle méthode est notamment décrite dans « UnOS: Unified Unsupervised Optical-flow and Stereo-depth Estimation by Watching Videos » de Yang Wang, Peng Wang, Zhenheng Yang, Chenxu Luo, Yi Yang et Wei Xu de juin 2019.

La méthode de calcul par flux optique est réalisée, par exemple, par un réseau de neurones convolutif (en anglais « Convolutional Neural Networks », CNN). Ce type d'outil est couramment utilisé dans le cadre du traitement d'images.

La donnée de sortie de cette opération 24 est une disparité représentative d'un déplacement entre chaque premier pixel du premier ensemble de pixels de la première image et le deuxième pixel correspondant à chaque premier pixel dans la deuxième image.

Dans une opération 25, une première profondeur associée à des pixels visibles du premier ensemble de pixels de la première image est calculée en fonction de valeurs de disparité associées à ces pixels. La première profondeur (« depth » en anglais) associée à un pixel est calculée, par exemple, suivant une formule connue de l'homme du métier :

[Math 1] ${D}_{ts} \left({p}_{t}\right) = f \times \frac{B}{d \left({p}_{t}\right)}$

Avec :
- *Dₜₛ*(*pₜ*) est la profondeur du pixel *pₜ* de la première image ;
- l'indice *s* signifie « stéréo » car la profondeur est calculée ici pour le système stéréo ;
- l'indice *t* signifie « target » (« cible » en français) ;
- *f* est la distance focale f1 en unité pixel ;
- *B* la distance entre les deux caméras du système stéréo ;
- *d*(*pₜ*) est la disparité du pixel *pₜ* en unité pixel, définie comme le déplacement d'un pixel de la première image à la deuxième image, ce déplacement est horizontal quand les images sont rectifiées et le système de vision stéréoscopique correctement étalonné.

Ce calcul est d'une précision métrique, c'est-à-dire que la profondeur mesurée ici est absolue et non relative. Dans le cas où les paramètres extrinsèques du système restent inchangés, ce calcul de profondeur est très précis.

Il est possible qu'un pixel de la première image ne trouve pas de pixel correspondant dans la deuxième image. Ce phénomène s'explique par le fait que des zones de la première image peuvent être occluses dans la deuxième image. En effet, la différence de point de vue des deux caméras 11, 12 ne permet pas aux deux caméras 11, 12 de voir tous les éléments de la scène. Un objet présent dans la scène, par exemple l'obstacle 18, peut masquer un second objet de la scène, le second objet étant visible du point de vue de la première caméra 11 mais étant masqué par l'obstacle 18 du point de vue de la deuxième caméra 12.

Une opération 26 de détermination des zones occluses de la première image consiste à déterminer un premier masque de visibilité associé à la première image et représentatif d'un deuxième ensemble de pixels de la première image ayant au moins un pixel correspondant dans la deuxième image, le premier masque de visibilité étant déterminé par une méthode de calcul par flux optique (en anglais « optical flow »). Une telle méthode est notamment décrite dans « UnOS: Unified Unsupervised Optical-flow and Stereo-depth Estimation by Watching Videos » de Yang Wang, Peng Wang, Zhenheng Yang, Chenxu Luo, Yi Yang et Wei Xu de juin 2019.

La définition d'un masque de visibilité est connue de l'homme du métier. Elle est, par exemple, décrite dans « Occlusion Aware Unsupervised Learning of Optical Flow », de Yang Wang, Yi Yang, Zhenheng Yang, Liang Zhao, Peng Wang et Wei Xu paru le 4 avril 2018.

La détermination du premier masque de visibilité permet de ne pas prendre en compte d'éventuelles valeurs aberrantes de disparité pour des pixels de la première image qui n'ont pas de correspondance dans la deuxième image.

Afin de fiabiliser le calcul de la disparité et la recherche des pixels associés, le réseau de neurones convolutif peut être entraîné de manière auto-supervisée. Cet apprentissage auto-supervisé permet d'affiner les paramètres du réseau de neurones convolutif.

Cet apprentissage auto-supervisé comprend en outre les étapes de :
- génération d'une quatrième image à partir de la première image et des premières profondeurs calculées ;
- obtention d'une première erreur de reconstruction par comparaison des deuxième et quatrième images,
   le réseau de neurones convolutif étant appris de manière automatique en fonction de la première erreur de reconstruction.

Un tel réseau de neurones convolutif est connu de l'homme du métier, comme par exemple : GCNet (de l'anglais « Global Context Network », en français « réseau de contexte global »), PSMNet (de l'anglais « Pyramid Stereo Matching Network », en français « réseau pyramidal de correspondance stéréoscopique »), PWCNet (de l'anglais « Pyramidal processing, Warping, and the use of a Cost volume Network », en français « Réseau de traitement pyramidal, déformation et utilisation d'un volume de coûts »). Pour trouver les bonnes valeurs des paramètres (appelés « weights » en anglais) d'un réseau de neurones convolutif choisi, la quatrième image appelée image cible (en anglais « target ») est reconstruite depuis la deuxième image, appelée image « source » pixel par pixel, à l'aide de la formule de reconstruction de pixels suivante :

[Math 2] ${p}_{ss}^{x} = {p}_{t}^{x} - d \left({p}_{t}\right)$

Avec :
- ${p}_{ss}^{x}$ est la position reconstruite du pixel *pₜ* suivant l'axe *x,* les indices *ss* signifient respectivement « source » et « stéréo » ;
- ${p}_{t}^{x}$ est la position du pixel *pₜ* suivant l'axe *x*, l'indice *t* signifie « target » (« cible » en français) ;
- *d*(*pₜ*) est la disparité calculée du pixel *pₜ*.

Le réseau de neurones convolutif est entraîné pour minimiser les différentes erreurs de reconstruction calculées par des fonctions de perte (en anglais « loss function »), telles que les fonctions suivantes. La performance du réseau de neurones convolutif est ainsi évaluée et ses paramètres optimisés.

La première fonction de perte est basée sur l'erreur photométrique. Une fois l'image source reconstruite à partir de la deuxième image et des disparités calculées, celle-ci est comparée à la véritable image source et définie comme suit :

[Math 3] ${L}_{s} \left(O\right) = {\sum }_{{p}_{t}} \left({V}_{s}\left({p}_{t}, O\right)⋅s\left(I\left({p}_{t}\right),{\hat{I}}_{s}\left({p}_{t}, O\right)\right)\right)$

Avec :
- *Lₛ* est la fonction de perte photométrique du système stéréo ;
- l'indice *s* indique « stéréo » ;
- *Vₛ*(*pₜ, O*) est la visibilité par le système stéréo du pixel reconstruit ;
- *I*(*pₜ*) est la valeur du pixel *pₜ* dans l'image cible ;
- *Î*(*pₜ, O*) est la valeur du pixel reconstruit pour le système stéréo défini à partir du pixel *pₜ* et de *O* ;
- *O* est la profondeur *Dₜₛ* d'un pixel *pₜ* calculée pour le système stéréo ;

La fonction *s* est l'erreur photométrique définie comme suit :

[Math 4] $s \left(I\left(p\right),\hat{I}\left(p\right)\right) = \left(1-α\right) ⋅ \left|I\left(p\right)-\hat{I}\left(p\right)\right| + α ⋅ \left(1-\frac{1}{2}SSIM\left(I\left(p\right),\hat{I}\left(p\right)\right)\right)$

Avec :
- *I*(*p*) est la valeur du pixel *p* dans l'image cible ;
- *Î*(*p*) est la valeur du pixel *p* dans l'image reconstruite ;
- SSIM (de l'anglais « structural similarity index measure », en français « mesure de l'indice de similarité structurelle ») est une fonction qui prend en compte une structure locale ; et
- *α* est un facteur de pondération dépendant notamment du type d'environnement.

La deuxième fonction de perte se base sur une cohérence de la disparité obtenue de la première image vers la deuxième image et celle obtenue dans le sens inverse, c'est-à-dire de la deuxième image vers la première image. La minimisation de la valeur de sortie de cette fonction aide à la convergence de l'architecture du système stéréo. La définition de cette fonction est la suivante :

[Math 5] ${L}_{sc} = \frac{1}{N} {\sum }_{p} \left|{d}_{p}^{\left(1\right)}-{d}_{p + {d}_{p}^{\left(1\right)}}^{\left(2\right)}\right|$

Avec :
- *L_{sc}* est la fonction de perte de cohérence pour le système stéréo ;
- l'indice *s* indique « stéréoscopique » ;
- l'indice *c* indique « cohérence » (en anglais « consistency ») ;
- *N* est un nombre de pixels de la première image ;
- *p* est un pixel de la première image ; et
- les indices supérieurs (1) et (2) indiquent respectivement que la disparité est obtenue de la première image vers la deuxième image et de la deuxième image vers la première image.

La troisième fonction de perte est généralement utilisée pour traiter la discontinuité à la bordure des objets (en anglais « edge aware smoothness ») et est définie comme suit :

[Math 6] ${L}_{smooth} \left(O, W, o\right) = {\sum }_{{p}_{t}} {\sum }_{d ∈ x , y} \left(W\left({p}_{t}\right)\left|{∇}_{d}^{o}O\left({p}_{t}\right)\right|{e}^{- β \left|{∇}_{d}^{2}{I}_{t}\left({p}_{t}\right)\right|}\right)$

Avec :
- *O* est la profondeur *Dₜₛ* d'un pixel *pₜ* calculée pour le système stéréo ;
- *W* est une matrice de paramètres ;
- *o* est l'ordre d'un gradient de lissage
- une norme L1 des gradients de profondeur du second ordre est calculée avec *W* =1, et *o* =2 ;
- *x* et *y* sont les dimensions de la première image ;
- *β* est un hyperparamètre dépendant de l'environnement ; et
- *Iₜ*(*pₜ*) est la valeur du pixel *pₜ* dans l'image cible.

Ainsi, à l'aide de ces fonctions de perte, des paramètres du réseau de neurones convolutif sont définis. Le résultat en sortie de calcul est une prédiction d'une première profondeur *Dₜₛ* par le système de vision monoscopique associée à au moins un premier pixel du premier ensemble de pixels de la première image.

Dans une opération 31, le calculateur reçoit des troisièmes données représentatives d'une troisième image acquise par la première caméra 11 à un deuxième instant temporel d'acquisition t2.

Cet instant temporel d'acquisition t2 est antérieur au premier instant temporel d'acquisition t1.

Les troisièmes données ont, par exemple, été sauvegardées dans une mémoire associée au calculateur ou dans une mémoire d'un dispositif embarqué dans le véhicule 10 et accessible au calculateur mettant en œuvre le processus.

Si le véhicule 10 est en mouvement, alors la troisième image correspond à une troisième vue de la scène prise depuis un troisième point de vue, celui de la première caméra 11 à sa position au deuxième instant temporel d'acquisition t2.

Cette position de la première caméra 11 au deuxième instant temporel d'acquisition t2 est définie par le déplacement du véhicule 10 entre les instants t2 et t1. Ce déplacement est donc lié à la vitesse du véhicule 10 pendant la durée séparant les premier et deuxième instants temporels d'acquisition t1 et t2.

La première caméra 11 dans les deux positions définies aux premier et deuxième instants temporels d'acquisition t1 et t2 forme un système de vision monoscopique. Les paramètres intrinsèques de ce système restent les mêmes que ceux définis précédemment liés à la première caméra 11 pour le système stéréo. Les paramètres extrinsèques de ce système de vision monoscopique sont les paramètres suivants :
- 3 translations dans les directions x, y et z : Tx', Ty' et Tz' constituant le vecteur translation T' ; et
- 3 rotations autour des axes x, y et z : Rx', Ry' et Rz', constituant la matrice de rotation R'.

Les paramètres extrinsèques du système de vision monoscopique sont, par exemple, déterminés par un calculateur associé à ce même système de vision monoscopique. La détermination des paramètres extrinsèques du système de vision monoscopique est connue de l'homme du métier et présentée, par exemple, dans le document Unsupervised Learning of Depth and Ego-Motion from Video de Tinghui Zhou, Matthew Brown, Noah Snavely et David G. Lowe paru le 1er août 2017.

Dans une opération 32, une deuxième profondeur associée à un troisième ensemble de pixels de la première image est calculée à partir des première et troisième images par le système de vision monoscopique, une telle opération 32 est également décrite dans le document précédemment cité.

Le fait de s'affranchir de l'obtention des paramètres extrinsèques via des capteurs supplémentaires permet une intégration plus aisée du dispositif de détermination d'une profondeur par système de vision monoscopique dans un véhicule 10.

Il est possible qu'un pixel de la première image ne trouve pas de pixel correspondant dans la troisième image. Ce phénomène s'explique par le fait que des zones de la première image peuvent être occluses dans la troisième image. En effet, la différence de point de vue de la première caméra 11 aux instants temporels d'acquisition t1, t2 ne permet pas à la première caméra 11 de voir tous les éléments de la scène. Un objet présent dans la scène, peut masquer un second objet de la scène, le second objet étant visible du point de vue de la première caméra 11 à l'instant temporel d'acquisition t1 mais étant masqué par un obstacle du point de vue de la première caméra 11 à l'instant temporel d'acquisition t2.

Une opération 33 de détermination des zones occluses de la première image consiste à déterminer un deuxième masque de visibilité associé à la première image et représentatif d'un quatrième ensemble de pixels de la première image ayant au moins un pixel correspondant dans la troisième image, le deuxième masque de visibilité étant déterminé par la méthode de calcul par flux optique précédemment exposée, le flux optique représentant un vecteur de déplacement entre chaque premier pixel du quatrième ensemble de pixels de la première image et le troisième pixel correspondant à chaque premier pixel dans la troisième image.

Dans ce mode de réalisation, l'apprentissage auto-supervisé du réseau de neurones convolutif associé au système de vision monoscopique est réalisé d'une façon similaire à celle utilisée pour l'apprentissage auto-supervisé du réseau de neurones convolutifs associé au système stéréo.

Cet apprentissage auto-supervisé comprend en outre les étapes de :
- génération d'une cinquième image à partir de la première image et des deuxièmes profondeurs calculées ;
- obtention d'une deuxième erreur de reconstruction par comparaison des troisième et cinquième images,
   le réseau de neurones convolutif étant appris de manière automatique en fonction de la deuxième erreur de reprojection.

Un tel réseau de neurones convolutif est connu de l'homme du métier, comme par exemple : GCNet, PSMNet, PWCNet. Pour trouver les bonnes valeurs des paramètres (appelés « weights » en anglais) d'un réseau de neurones convolutif choisi, la cinquième image, appelée image cible (en anglais « target ») est reconstruite depuis la troisième image, appelée image « source » pixel par pixel, à l'aide de la formule de reprojection suivante :
[Math 7] ${p}_{ms} = π \left(K\left[{T}_{t \to s}∅\left({p}_{t}\left|K,{D}_{tm}\left({p}_{t}\right)\right.\right)\right.\right.$

Avec :
- π est une fonction pour passer de coordonnées homogènes à des coordonnées pixels en supprimant une dimension du vecteur ;
- *K* est la matrice intrinsèque de la première caméra associée à la projection d'un point de l'espace (3 dimensions) dans l'image (2 dimensions) ;
- *T* est une matrice de déplacement entre les positions de la première caméra au premier instant temporel d'acquisition t1 et au deuxième instant temporel d'acquisition t2 ;
- Ø est une fonction de rétroprojection d'un pixel en fonction de sa profondeur ;
- *Dₜₘ*(*pₜ*) est la profondeur du pixel *pₜ* calculée pour le système de vision monoscopique.

Le réseau de neurones convolutif est entraîné pour minimiser les différentes erreurs de reconstruction calculées par des fonctions de perte (en anglais « loss function »), telles que les fonctions suivantes. La performance du réseau de neurones convolutif est ainsi évaluée et ses paramètres optimisés.

La première fonction de perte est basée sur l'erreur photométrique. Une fois l'image source reconstruite à partir de la première image et des disparités calculées, celle-ci est comparée à la véritable image source et définie comme suit :

[Math 8] ${L}_{m} \left(O\right) = {\sum }_{{p}_{t}} \left({V}_{m}\left({p}_{t}, O\right)⋅s\left(I\left({p}_{t}\right),{\hat{I}}_{m}\left({p}_{t}, O\right)\right)\right)$

Avec :
- *Lₘ* est la fonction de perte photométrique du système de vision monoscopique ;
- l'indice *m* indique « monoscopique » ;
- *Vₘ*(*pₜ*, *O*) est la visibilité par le système de vision monoscopique du pixel reconstruit ;
- *I*(*pₜ*) est la valeur du pixel *pₜ* dans l'image cible ;
- Îₘ(*pₜ*, *O*) est la valeur du pixel reconstruit pour le système de vision monoscopique défini à partir du pixel *pₜ* et de *O* ;
- *O* est la profondeur *Dₜₘ* d'un pixel *pₜ* calculée pour le système de vision monoscopique;

La fonction *s* est l'erreur photométrique définie comme suit :

[Math 9] $s \left(I\left(p\right),\hat{I}\left(p\right)\right) = \left(1-α\right) ⋅ \left|I\left(p\right)-\hat{I}\left(p\right)\right| + α ⋅ \left(1-\frac{1}{2}SSIM\left(I\left(p\right),\hat{I}\left(p\right)\right)\right)$

Avec :
- *I*(*p*) est la valeur du pixel *p* dans l'image cible ;
- *Î(p)* est la valeur du pixel *p* dans l'image reconstruite ;
- SSIM (de l'anglais « structural similarity index measure », en français « mesure de l'indice de similarité structurelle ») est une fonction qui prend en compte une structure locale ; et
- *α* est un facteur de pondération dépendant notamment du type d'environnement.

La deuxième fonction de perte est généralement utilisée pour traiter la discontinuité à la bordure des objets (en anglais « edge aware smoothness ») et est définie comme suit :

[Math 10] ${L}_{smooth} \left(O, W, o\right) = {\sum }_{{p}_{t}} {\sum }_{d ∈ x , y} \left(W\left({p}_{t}\right)\left|{∇}_{d}^{o}O\left({p}_{t}\right)\right|{e}^{- β \left|{∇}_{d}^{2}{I}_{t}\left({p}_{t}\right)\right|}\right)$

Avec :
- *O* est le flux optique *F*_{*t→*s} d'un pixel *pₜ* calculé pour le système de vision monoscopique ;
- *W* est une matrice de paramètres ;
- *o* est l'ordre d'un gradient de lissage ;
- une norme L1 des gradients de profondeur du second ordre est calculée avec *W* =1 , et *o* =2 ;
- *x* et *y* sont les dimensions de la première image ;
- *β* est un hyperparamètre dépendant de l'environnement ; et
- *Iₜ*(*p*ₜ) est la valeur du pixel *pₜ* dans l'image cible.

Ainsi, à l'aide de ces fonctions de perte, des paramètres du réseau de neurones convolutif sont définis. Le résultat en sortie de calcul est une prédiction d'une deuxième profondeur *Dₜₘ* par le système de vision monoscopique associée à au moins un premier pixel du deuxième ensemble de pixels de la première image.

La prédiction de la profondeur par le système de vision monoscopique n'est pas d'une précision métrique. Il est donc nécessaire, afin d'améliorer la pertinence des deuxièmes profondeurs calculées, de mettre en place dans une opération 27 un apprentissage automatique supervisé (en anglais « knowledge distillation ») du réseau de neurones convolutif permettant de définir la deuxième profondeur via le système de vision monoscopique.

Suivant un exemple de réalisation, le réseau de neurones convolutif permettant de calculer la deuxième profondeur est entraîné sous supervision du système stéréo de manière à minimiser la fonction de perte suivante :

[Math 11] ${L}_{s \to m} = {\sum }_{{p}_{t}} \left({V}_{s}\left({p}_{t}\right){\left‖{D}_{tm}\left({p}_{t}\right)-{D}_{ts}\left({p}_{t}\right)\right‖}_{2}\right)$

Avec :
- *L*_{*s*→*m*} correspond à une perte de recalage de la première profondeur par rapport à la deuxième profondeur ;
- *pₜ* est un pixel de la première image ;
- *Vₛ*(*pₜ*) est une information de visibilité du pixel *pₜ* par le système stéréo ;
- *Dₜₘ* est la deuxième profondeur calculée pour un pixel *pₜ* ; et
- *Dₜₛ* est la première profondeur calculée pour un pixel *pₜ*.

Ainsi, les calculs de deuxième profondeur sont affinés, les premières profondeurs correspondant aux annotations permettant l'apprentissage du système de vision monoscopique.

Un premier apprentissage automatique de système de vision monoscopique est réalisé sous supervision du système de vision stéréoscopique par minimisation d'une première erreur de calcul entre les première et deuxième profondeurs en fonction du premier masque de visibilité.

Dans une opération 28, Il est également possible d'entraîner le système stéréo avec l'aide du système de vision monoscopique. Afin de réaliser ce deuxième apprentissage supervisé, il convient de n'exploiter que les pixels du deuxième ensemble de pixels de la première image pertinents.

Un deuxième masque de visibilité a déjà été déterminé précédemment dans l'opération 33.

Le système de vision monoscopique n'est pas capable de mesurer la profondeur avec la reconstruction d'image pour des pixels associés à un objet en mouvement de la scène. Il convient donc de déterminer un masque d'objets dynamiques pour le système de vision monoscopique.

Dans une opération 34, un masque des objets dynamiques associé à la première image et représentatif d'un cinquième ensemble de pixels de la première image associés à un objet en mouvement dans la scène est déterminé.

Un tel masque d'objets dynamiques défini précédemment est connu de l'homme du métier et est présenté dans le document « Every Pixel Counts ++: Joint Learning of Geometry and Motion with 3D Holistic Understanding » de Chenxu Luo, Zhenheng Yang, Peng Wang, Yang Wang, Wei Xu, Ram Nevatia et Alan Yuille du 11 juillet 2019.

Il est également possible de définir le masque des objets dynamiques suivant une autre méthode, à l'aide des formules suivantes :

[Math 12] ${M}_{b} \left({p}_{t}\right) = {V}_{m} \left({p}_{t}\right) \left[{T}_{s \to t}ϕ\left({p}_{s}\left|{D}_{sm}\left({p}_{s}\right)\right.\right)-ϕ\left({p}_{t}\left|{D}_{tm}\left({p}_{t}\right)\right.\right)\right]$

[Math 13] ${M}_{d} \left({p}_{t}\right) = 1 - {e}^{- α {\left‖{M}_{b}\left({p}_{t}\right)\right‖}_{2}}$

[Math 14] $ϕ \left({p}_{t}\left|{D}_{tm}\left({p}_{t}\right)\right.\right) = {D}_{tm} \left({p}_{t}\right) {K}^{- 1} h \left({p}_{t}\right)$

Avec :
- *M_{b}*(*pₜ*) est le masque pour l'environnement statique appliqué au pixel *pₜ* de la première image ;
- *Vₘ*(*pₜ*) est représentatif de la visibilité du pixel *pₜ* par le système de vision monoscopique ;
- *T*_{*s*→*t*} est la matrice de déplacement de la première caméra entre le premier instant temporel d'acquisition t1 et le deuxième instant temporel d'acquisition t2 ;
- *ϕ* est la rétroprojection d'un pixel *p* avec sa profondeur *D*(*p*) correspondante ;
- *Dₛₘ*(*pₛ*) est la profondeur d'un pixel source *pₛ* de la troisième image calculée pour le système de vision monoscopique ;
- *Dₜₘ*(*pₜ*) est la profondeur d'un pixel cible *pₜ* de la première image calculée pour le système de vision monoscopique ;
- *M_{d}*(*pₜ*) est le masque pour l'environnement dynamique appliqué au pixel *pₜ* de la première image ;
- *K* est la matrice intrinsèque de la première caméra 11 ;
- ∥ ∥₂ est l'erreur au carré (L2 norme) ;
- *h*(*pₜ*) transforme le vecteur du pixel *pₜ* à la coordonnée homogène en ajoutant une dimension au vecteur des coordonnées du pixel *pₜ* pour permettre la multiplication de matrices.

L'hypothèse de *M_{b}* est que les points statiques dans l'espace 3D ne changent pas leurs positions pendant la durée séparant deux images consécutives. Le masque *M_{d}* est construit par une fonction exponentielle avec un hyperparamètre *α* pour trouver un bon critère pour *M_{b}.* Le caractère statique des objets est ainsi considéré de manière relative, la pondération étant mise en œuvre via la fonction exponentielle.

On remarque ici que pour le système de vision monoscopique, la fonction précédemment décrite permettant le calcul de l'erreur photométrique doit être multiplié par 1 - *M_{d}*(*pₜ*)*.*

La prise en compte du deuxième masque de visibilité et du masque des objets dynamiques permet ainsi d'exploiter les profondeurs calculées pour le système de vision monoscopique en les utilisant comme valeurs annotées lors de l'apprentissage supervisé du système stéréo. Ainsi, les paramètres du réseau de neurones convolutif permettant de calculer les premières profondeurs peuvent être ajustés lors de l'opération 28 à l'aide de la fonction perte définie telle que :

[Math 15] ${L}_{m \to s} = {\sum }_{{p}_{t}} \left({V}_{m}\left({p}_{t}\right)\left[1-{M}_{d}\left({p}_{t}\right)\right]\left(1-{V}_{s}\left({p}_{t}\right)\right){\left‖{D}_{tm}\left({p}_{t}\right)-{D}_{ts}\left({p}_{t}\right)\right‖}_{2}\right)$

Avec :
- *L*_{*m*→*s*} correspond à une perte de recalage de la deuxième profondeur par rapport à la première profondeur ;
- *pₜ* est un pixel de la première image ;
- *Vₛ*(*pₜ*) est une information de visibilité du pixel *pₜ* par le système stéréo ;
- *Vₘ*(*pₜ*) est une information de visibilité du pixel *pₜ* par le système de vision monoscopique ;
- *M_{d}*(*pₜ*) est une information de mouvement obtenue du masque des objets dynamiques ;
- *Dₜₘ* est la deuxième profondeur associée à un objet ; et
- *Dₜₛ* est la première profondeur associée à un objet.

Ainsi, les calculs de première profondeur sont affinés, les deuxièmes profondeurs correspondant aux annotations permettant l'apprentissage du système de vision stéréoscopique.

Si l'ADAS utilise les premières ou deuxièmes profondeurs comme donnée d'entrée pour déterminer la distance entre une partie du véhicule 10, par exemple le pare-chocs avant, et un autre usager présent sur la route, l'ADAS est alors en mesure de déterminer précisément cette distance. Par exemple, si l'ADAS a pour fonction d'agir sur un système de freinage du véhicule 10 en cas de risque de collision avec un autre usager de la route et que la distance séparant le véhicule 10 de ce même usager de la route diminue fortement, alors l'ADAS est en mesure de détecter ce rapprochement soudain et d'agir sur le système de freinage du véhicule 10 pour éviter un éventuel accident.

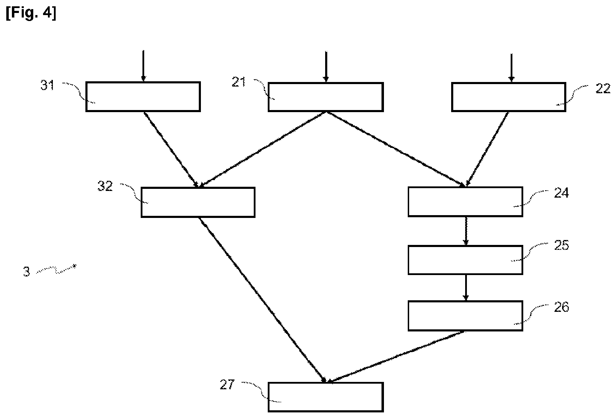

La figure 4 illustre un organigramme des différentes étapes d'un procédé 3 de de détermination d'une profondeur par système de vision stéréoscopique embarqué dans le véhicule de la figure 1, selon un exemple de réalisation particulier et non limitatif de la présente invention. Le procédé est par exemple mis en œuvre par un dispositif embarqué dans le premier véhicule 10 ou par le dispositif 4 de la figure 2.

Dans une première étape 21, des premières données représentatives d'une première image acquise par une première caméra 11 dudit ensemble de caméras à un premier instant temporel d'acquisition t1 sont reçues.

Dans une deuxième étape 22, des deuxièmes données représentatives d'une deuxième image acquise par une deuxième caméra 12 de l'ensemble de caméras au même premier instant temporel d'acquisition t1 sont reçues.

Dans une troisième étape 24, un ensemble de pixels dans la deuxième image correspondant à un premier ensemble de pixels de la première image est déterminé.

Dans une quatrième étape 25, des premières profondeurs associées au premier ensemble de pixels de la première image sont calculées en fonction de valeurs de disparité associées au premier ensemble de pixels de la première image.

Dans une étape 26, un premier masque de visibilité associé à la première image et représentatif d'un deuxième ensemble de pixels de la première image ayant au moins un pixel correspondant dans la deuxième image est déterminé par une méthode de calcul par flux optique.

Dans une étape 31, des troisièmes données représentatives d'une troisième image acquise par la première caméra 11 de l'ensemble de caméras 11, 12 à un instant temporel d'acquisition t1 antérieur à l'instant temporel d'acquisition t2 est reçue.

Dans une étape 32, des deuxièmes profondeurs associées à un troisième ensemble de pixels de la première image sont calculées par le système de vision monoscopique.

Dans une étape 27, un premier apprentissage automatique du système de vision monoscopique est réalisé sous supervision du système de vision stéréoscopique par minimisation d'une première erreur de calcul entre les première et deuxième profondeurs en fonction du premier masque de visibilité.

Selon une variante, les variantes et exemples des opérations décrits en relation avec les figures 1 et 3 s'appliquent aux étapes du procédé de la figure 4.

Bien entendu, la présente invention ne se limite pas aux exemples de réalisation décrits ci-avant mais s'étend à un procédé de détermination d'une profondeur par système de vision stéréoscopique embarqué dans un véhicule, qui inclurait des étapes secondaires sans pour cela sortir de la portée de la présente invention, qui est définie dans les revendications jointes. Il en serait de même d'un dispositif configuré pour la mise en œuvre d'un tel procédé.

La présente invention concerne également un véhicule, par exemple automobile ou plus généralement un véhicule autonome à moteur terrestre, comprenant le dispositif 4 de la figure 2.

## Revendications

1. Procédé de détermination d'une profondeur par un système de vision stéréoscopique embarqué dans un véhicule (10), le système de vision stéréoscopique comprenant un ensemble de caméras d'au moins deux caméras (11, 12) disposées de manière à acquérir chacune une image d'une scène selon un point de vue différent, les axes optiques représentatifs d'une orientation du champ de vision de chaque caméra étant orientés de façon non parallèle,
ledit procédé étant **caractérisé en ce qu'**il comprend les étapes suivantes :
- réception (21, 22) de premières et deuxièmes données respectivement représentatives d'une première et deuxième images acquises par respectivement une première et deuxième caméras (11, 12) dudit ensemble de caméras à un même premier instant temporel d'acquisition ;
- détermination (24) d'un ensemble de pixels de ladite deuxième image correspondant à un premier ensemble de pixels de ladite première image ;
- calcul (25) de premières profondeurs associées audit premier ensemble de pixels de la première image en fonction de valeurs de disparité déterminées à partir dudit ensemble de pixels de la deuxième image et dudit premier ensemble de pixels de la première image ;
- détermination (26) d'un premier masque de visibilité associé à ladite première image et représentatif d'un deuxième ensemble de pixels de ladite première image ayant au moins un pixel correspondant dans ladite deuxième image, ledit premier masque de visibilité étant déterminé par une méthode de calcul par flux optique ;
- réception (31) de troisièmes données représentatives d'une troisième image acquise par ladite première caméra (11) à un deuxième instant temporel d'acquisition antérieur audit premier instant temporel d'acquisition de ladite première image ;
- calcul (32) de deuxièmes profondeurs associées à un troisième ensemble de pixels de la première image via un système de vision monoscopique à partir d'un ensemble de pixels de la troisième image correspondants audit troisième ensemble de pixels de la première image et dudit troisième ensemble de pixels de la première image,
ledit système de vision monoscopique étant formé de ladite première caméra (11) ;
- premier apprentissage automatique (27) dudit système de vision monoscopique sous supervision dudit système de vision stéréoscopique par minimisation d'une première erreur de calcul entre lesdites première et deuxième profondeurs en fonction dudit premier masque de visibilité.

2. Procédé selon la revendication 1, pour lequel ledit premier apprentissage automatique est obtenu par minimisation de la fonction suivante représentative de ladite première erreur : ${L}_{s \to m} = {\sum }_{{p}_{t}} \left({V}_{s}\left({p}_{t}\right){\left‖{D}_{tm}\left({p}_{t}\right)-{D}_{ts}\left({p}_{t}\right)\right‖}_{2}\right)$ Avec :
- *L*_{*s*→*m*} correspond à une perte de recalage de la première profondeur par rapport à la deuxième profondeur ;
- *pₜ* est un pixel de la première image ;
- *Vₛ*(*pₜ*) est une information de visibilité du pixel *pₜ* par le système de vision stéréoscopique ;
- *Dₜₘ* est la deuxième profondeur calculée pour un pixel *pₜ* ; et
- *Dₜₛ* est la première profondeur calculée pour un pixel *pₜ*.

3. Procédé selon l'une des revendications 1 à 2, comprenant en outre un deuxième apprentissage automatique (28) dudit système de vision stéréoscopique sous supervision dudit système de vision monoscopique par minimisation d'une deuxième erreur de calcul entre lesdites première et deuxième profondeurs en fonction dudit premier masque de visibilité.

4. Procédé selon la revendication 3, comprenant en outre une étape de détermination (33) d'un deuxième masque de visibilité associé à ladite première image et représentatif d'un quatrième ensemble de pixels de la première image ayant au moins un pixel correspondant dans ladite troisième image, ledit deuxième masque de visibilité étant déterminé par ladite méthode de calcul par flux optique,
ledit deuxième apprentissage automatique étant en outre fonction dudit deuxième masque de visibilité.

5. Procédé selon l'une des revendications 3 à 4, comprenant en outre une étape de détermination (34) d'un masque d'objets dynamiques associé à ladite première image et représentatif d'un cinquième ensemble de pixels de la première image associé à au moins un objet en mouvement dans ladite scène ;
ledit deuxième apprentissage automatique étant en outre fonction dudit masque d'objets dynamiques.

6. Procédé selon les revendications 4 et 5, pour lequel ledit deuxième apprentissage est obtenu, en outre, par minimisation de la fonction suivante représentative de la deuxième erreur : ${L}_{m \to s} = {\sum }_{{p}_{t}} \left({V}_{m}\left({p}_{t}\right)\left[1-{M}_{d}\left({p}_{t}\right)\right]\left(1-{V}_{s}\left({p}_{t}\right)\right){\left‖{D}_{tm}\left({p}_{t}\right)-{D}_{ts}\left({p}_{t}\right)\right‖}_{2}\right)$ Avec :
- *L*_{*m*→*s*} correspond à une perte de recalage de la deuxième profondeur par rapport à la première profondeur ;
- *pₜ* est un pixel de la première image ;
- *Vₛ*(*pₜ*) est une information de visibilité du pixel *pₜ* par le système de vision stéréoscopique ;
- *Vₘ*(*pₜ*) est une information de visibilité du pixel *pₜ* par le système de vision monoscopique ;
- *M_{d}*(*pₜ*) est une information de mouvement obtenue du masque des objets dynamiques ;
- *Dₜₘ*(*pₜ*) est ladite deuxième profondeur calculée pour un pixel *pₜ* ; et
- *Dₜₛ*(*pₜ*) est ladite première profondeur calculée pour un pixel *pₜ*.

7. Procédé selon l'une des revendications 1 à 6, pour lequel lesdites premières profondeurs sont calculées via un réseau de neurones convolutif à apprentissage auto-supervisé, le procédé comprenant en outre les étapes de :
- reconstruction d'une quatrième image à partir de ladite première image et desdites premières profondeurs ;
- obtention d'une première erreur de reconstruction par comparaison desdites deuxième et quatrième images,
ledit réseau de neurones convolutif étant appris de manière auto-supervisée en fonction de ladite première erreur de reconstruction.

8. Procédé selon l'une des revendications 1 à 7, pour lequel lesdites deuxièmes profondeurs sont calculées via un réseau de neurones convolutif à apprentissage auto-supervisé, le procédé comprenant en outre les étapes de :
- reconstruction d'une cinquième image à partir de ladite première image et desdites deuxièmes profondeurs ;
- obtention d'une deuxième erreur de reconstruction par comparaison desdites troisième et cinquième images,
ledit réseau de neurones convolutif étant appris de manière auto-supervisée en fonction de ladite deuxième erreur de reconstruction.

9. Dispositif (4) de détermination d'une profondeur par un système de vision stéréoscopique embarqué dans un véhicule (10), ledit dispositif (4) comprenant une mémoire (41) associée à au moins un processeur (40) configuré pour la mise en œuvre des étapes du procédé selon l'une quelconque des revendications 1 à 8.

10. Véhicule (10) comprenant le dispositif (4) selon la revendication 9.

## Patentansprüche

1. Verfahren zum Bestimmen einer Tiefe durch ein stereoskopisches Sichtsystem an Bord eines Fahrzeugs (10), wobei das stereoskopische Sichtsystem einen Satz von Kameras von mindestens zwei Kameras (11, 12) umfasst, die so angeordnet sind, dass sie jeweils ein Bild einer Szene gemäß einem unterschiedlichen Blickpunkt erfassen, wobei die optischen Achsen, die eine Orientierung des Sichtfeldes jeder Kamera darstellen, in einer nicht parallelen Weise ausgerichtet sind,
wobei das Verfahren **dadurch gekennzeichnet ist, dass** es die Schritte umfasst:
- Empfang (21, 22) von ersten bzw. zweiten Daten, die jeweils ein erstes bzw. zweites Bild darstellen, das von einer ersten bzw. zweiten Kamera (11, 12) des Satzes von Kameras zu einem gleichen ersten zeitlichen Zeitpunkt von Akquisition;
- Bestimmung (24) eines Satzes von Pixeln des zweiten Bildes entsprechend einem ersten Satz von Pixeln des ersten Bildes;
- Berechnung (25) erster Tiefen, die dem ersten Satz von Pixeln des ersten Bildes zugeordnet si nd, auf der Grundlage von Disparitätswerten, die aus dem Satz von Pixeln des zweiten Bildes u nd dem ersten Satz von Pixeln des ersten Bildes bestimmt werden;
- Bestimmung (26) einer ersten Sichtbarkeitsmaske, die dem ersten Bild zugeordnet ist und einen zweiten Satz von Pixeln des ersten Bildes darstellt, der mindestens ein entsprechendes Pixel in dem zweiten Bild aufweist, wobei die erste Sichtbarkeitsmaske durch ein optisches Flussberechnungsverfahren bestimmt wird;
- Empfang (31) von dritten Daten, die ein drittes Bild darstellen, das von der ersten Kamera (11) vor einer ersten Akquisitionszeit akquisition akquiriert wird Erfassungszeit des ersten Bildes;
- Berechnung (32) von zweiten Tiefen, die einem dritten Satz von Pixeln des ersten Bildes zugeordnet sind, über ein monoskopisches Sichtsystem aus einem Satz von Pixeln des dritten Bildes, der dem dritten Satz von Pixeln des ersten Bildes entspricht, und dem dritten Satz von Pixeln des ersten Bildes,
wobei das monoskopische Sichtsystem aus der ersten Kamera (11) gebildet ist;
- Erstes maschinelles Lernen (27) des monoskopischen Sichtsystems unter Überwachung des stereoskopischen Sichtsystems durch Minimieren eines ersten Berechnungsfehlers zwischen der ersten und der zweiten Tiefe als Funktion der ersten Sichtmaske.

2. Verfahren nach Anspruch 1, wobei das erste maschinelle Lernen durch Minimieren der folgenden Funktion erhalten wird, die den ersten Fehler darstellt: ${L}_{s \to m} = {\sum }_{{p}_{t}} \left({V}_{s}\left({p}_{t}\right){\left‖{D}_{tm}\left({p}_{t}\right)-{D}_{ts}\left({p}_{t}\right)\right‖}_{2}\right)$ Mit:
- *L*_{*s*→*m*} entspricht ein Registerverlust von der ersten bis zur zweiten Reporttiefe;
- *pₜ* ist ein Pixel des ersten Bildes;
- *Vₛ*(*pₜ*) *pₜ-* ist eine Information über die Sichtbarkeit des Pixels durch das stereoskopische Sehsystem;
- *Dₜₘ* ist die für ein Pixel berechnete zweite Tiefe *pₜ* ; und
- *Dₜₛ pₜ* ist die für ein Pixel berechnete erste Tiefe *pₜ*.

3. Verfahren nach einem der Ansprüche 1 bis 2, ferner umfassend ein zweites maschinelles Lernen (28) des stereoskopischen Sehsystems unter Überwachung des monoskopischen Sehsystems durch Minimieren eines zweiten Berechnungsfehlers zwischen der ersten und der zweiten Tiefe als Funktion der ersten Sichtmaske.

4. Verfahren nach Anspruch 3, ferner mit einem Schritt des Bestimmens (33) einer zweiten Sichtbarkeitsmaske, die dem ersten Bild zugeordnet ist und einen vierten Satz von Pixeln des ersten Bildes darstellt, der mindestens ein entsprechendes Pixel in dem dritten Bild aufweist, wobei die zweite Sichtbarkeitsmaske durch das optische Flussberechnungsverfahren bestimmt wird,
wobei das zweite maschinelle Lernen ferner von der zweiten Sichtbarkeitsmaske abhängt.

5. Verfahren nach einem der Ansprüche 3 bis 4, ferner mit einem Schritt (34) des Bestimmens einer dynamischen Objektmaske, die dem ersten Bild zugeordnet ist und einen fünften Satz von Pixeln des ersten Bildes repräsentiert, der mindestens einem sich bewegenden Objekt in der Szene zugeordnet ist;
wobei das zweite maschinelle Lernen ferner von der dynamischen Objektmaske abhängt.

6. Verfahren nach den Ansprüchen 4 und 5, bei dem das zweite Lernen zusätzlich durch Minimieren der nächsten Funktion erhalten wird, die den zweiten Fehler darstellt: ${L}_{m \to s} = {\sum }_{{p}_{t}} \left({V}_{m}\left({p}_{t}\right)\left[1-{M}_{d}\left({p}_{t}\right)\right]\left(1-{V}_{s}\left({p}_{t}\right)\right){\left‖{D}_{tm}\left({p}_{t}\right)-{D}_{ts}\left({p}_{t}\right)\right‖}_{2}\right)$ Mit:
- *L*_{*m*→*s*} entspricht einem Verlust des Rücksetzens von der zweiten Tiefe durch Bericht auf die erste Tiefe;
- *pₜ* ist ein Pixel des ersten Bildes;
- *Vₛ*(*pₜ*)ist Information über die Sichtbarkeit des Pixels *pₜ* durch das stereoskopische Sichtsystem;
- *Vₘ*(*pₜ*) ist die Sichtbarkeitsinformation des Pixels *pₜ* durch das stereoskopische Sichtsystem;
- *M_{d}*(*pₜ*) ist Bewegungsinformationen aus der Smart-Objekt-Maske;
- *Dₜₘ*(*pₜ*) ist die zweite Tiefe, die für ein Pixel *pₜ* berechnet wird; und
- *Dₜₛ*(*pₜ*) ist die erste Tiefe, die für ein Pixel *pₜ* berechnet wird.

7. Verfahren nach einem der Ansprüche 1 bis 6, bei dem die ersten Tiefen über ein Faltungsneuronennetzwerk mit selbstüberwachtem Lernen berechnet werden, wobei das Verfahren ferner die folgenden Schritte umfasst:
- Rekonstruktion eines vierten Bildes aus dem ersten Bild und den ersten Tiefen;
- Erhalten eines ersten Rekonstruktionsfehlers durch Vergleichen des zweiten und des vierten Bildes,
wobei das Faltungsneuronennetzwerk in einer selbstüberwachten Weise als Funktion des ersten Rekonstruktionsfehlers gelernt wird.

8. Verfahren nach einem der Ansprüche 1 bis 7, bei dem die zweiten Tiefen über ein selbstüberwachtes lernendes Faltungsneuronennetzwerk berechnet werden, wobei das Verfahren ferner die folgenden Schritte umfasst:
- Rekonstruieren eines fünften Bildes aus dem ersten Bild und den zweiten Tiefen;
- Erhalten eines zweiten Rekonstruktionsfehlers durch Vergleichen des dritten und des fünften Bildes,
wobei das Faltungsneuronennetzwerk in einer selbstüberwachten Weise als Funktion des zweiten Rekonstruktionsfehlers gelernt wird.

9. Vorrichtung (4) zum Bestimmen einer Tiefe durch ein stereoskopisches Sichtsystem an Bord eines Fahrzeugs (10), wobei die Vorrichtung (4) einen Speicher (41) umfasst, der mit mindestens einem Prozessor (40) verbunden ist, der zum Implementieren der Schritte des Verfahrens nach einem der Ansprüche 1 bis 8 konfiguriert ist.

10. Fahrzeug (10) mit der Vorrichtung (4) nach Anspruch 9.

## Claims

1. Method for determining a depth by a stereoscopic vision system on board a vehicle (10), the stereoscopic vision system comprising a set of cameras of at least two cameras (11, 12) arranged so as to each acquire an image of a scene according to a different viewpoint, the optical axes representative of an orientation of the field of view of each camera being orientated in a non-parallel manner,
said method being **characterised in that** it comprises the steps of:
- receipt (21, 22) of first and second data respectively representative of a first and second images acquired by respectively a first and second cameras (11, 12) of said set of cameras at a same first temporal instant of acquisition;
- determination (24) of a set of pixels of said second image corresponding to a first set of pixels of said first image;
- calculation (25) of first depths associated with said first set of pixels of the first image as a function of disparity values determined from said set of pixels of the second image and said first set of pixels of the first image;
- determination (26) of a first visibility mask associated with said first image and representative of a second set of pixels of said first image having at least one corresponding pixel in said second image, said first visibility mask being determined by an optical flow compute method;
- receipt (31) of third data representative of a third image acquired by said first camera (11) at a second acquisition time prior to said first acquisition time of said first image;
- calculation (32) of second depths associated with a third set of pixels of the first image via a monoscopic vision system from a set of pixels of the third image corresponding to said third set of pixels of the first image and the third set of pixels of the first image,
said monoscopic vision system being formed of said first camera (11);
- first machine learning (27) of said monoscopic vision system under supervision of said stereoscopic vision system by minimising a first calculation error between said first and second depths as a function of said first visibility mask.

2. Method according to claim 1, wherein said first machine learning is obtained by minimising the following function representative of said first error: ${L}_{s \to m} = {\sum }_{{p}_{t}} \left({V}_{s}\left({p}_{t}\right){\left‖{D}_{tm}\left({p}_{t}\right)-{D}_{ts}\left({p}_{t}\right)\right‖}_{2}\right)$ With:
- *L*_{*s*→*m*} corresponds to a loss of registration from the first report depth to the second depth;
- *pₜ* is a pixel of the first image;
- *Vₛ*(*pₜ*)*-* is an information of visibility of the pixel *pₜ* by the stereoscopic vision system;
- *Dₜₘ* is the second depth calculated for a pixel *pₜ* ; and
- *Dₜₛ* is the first depth calculated for a pixel *pₜ*

3. Method according to one of claims 1 to 2, further comprising a second machine learning (28) of said stereoscopic vision system under supervision of said monoscopic vision system by minimising a second calculation error between said first and second depths as a function of said first visibility mask.

4. Method according to claim 3, further comprising a step of determining (33) a second visibility mask associated with said first image and representative of a fourth set of pixels of the first image having at least one corresponding pixel in said third image, said second visibility mask being determined by said optical flow compute method,
said second machine learning further depending on said second visibility mask.

5. Method according to one of claims 3 to 4, further comprising a step (34) of determining a dynamic object mask associated with said first image and representative of a fifth set of pixels of the first image associated with at least one moving object in said scene;
said second machine learning further depending on said dynamic object mask.

6. Method according to Claims 4 and 5, for which said second learning is obtained, in addition, by minimising the next function representative of the second error: ${L}_{m \to s} = {\sum }_{{p}_{t}} \left({V}_{m}\left({p}_{t}\right)\left[1-{M}_{d}\left({p}_{t}\right)\right]\left(1-{V}_{s}\left({p}_{t}\right)\right){\left‖{D}_{tm}\left({p}_{t}\right)-{D}_{ts}\left({p}_{t}\right)\right‖}_{2}\right)$ With:
- *L*_{*m*→*s*} corresponds to a loss of resetting from the second depth by report to the first depth;
- *pₜ* is a pixel of the first image;
- *Vₛ*(*pₜ*)is an information on the visibility of the pixel *pₜ* by the stereoscopic vision system;
- *Vₘ*(*pₜ*) is an information on the visibility of the pixel *pₜ* by the monoscopic vision system;
- *M_{d}*(*pₜ*) is a movement information obtained from the mask of the dynamic objects
- *Dₜₘ*(*pₜ*) is said second depth calculated for a pixel *pₜ*
- *Dₜₛ*(*pₜ*) is said first depth calculated for a pixel *pₜ*.

7. Method according to one of claims 1 to 6, for which said first depths are calculated via a convolutional neuron network with self-supervised learning, the method further comprising the steps of:
- reconstruction of a fourth image from said first image and said first depths;
- obtaining a first reconstruction error by comparing said second and fourth images,
said convolutional neuron network being learned in a self-supervised manner as a function of said first reconstruction error.

8. Method according to one of claims 1 to 7, for which said second depths are calculated via a self-supervised learning convolutional neuron network, the method further comprising the steps of:
- reconstructing a fifth image from said first image and said second depths;
- obtaining a second reconstruction error by comparing said third and fifth images,
said convolutional neuron network being learned in a self-supervised manner as a function of said second reconstruction error.

9. Device (4) for determining a depth by a stereoscopic vision system on board a vehicle (10), said device (4) comprising a memory (41) associated with at least one processor (40) configured for implementing the steps of the method according to any one of claims 1 to 8.

10. Vehicle (10) comprising the device (4) according to claim 9.
